# EUROPÄISCHE PATENTSCHRIFT

(11) **EP 4 244 262 B1**
(45) Veröffentlichungstag und Bekanntmachung des Hinweises auf die Patenterteilung: **01.01.2025**
(21) Anmeldenummer: 21798398.0
(22) Anmeldetag: 02.11.2021
(51) Int. Cl.: C08F 2/18, C08F 220/18, C08F 265/06, C08F 2/24, C08F 2/00, C08F 4/34

(54) **POLYMERROHSTOFFE MIT REDUZIERTER REAKTIVITÄT FÜR LAGERSTABILE REAKTIONSHARZE**
POLYMER RAW MATERIALS WITH REDUCED REACTIVITY FOR STORAGE-STABLE REACTION RESINS
MATIÈRES PREMIÈRES POLYMÈRES À RÉACTIVITÉ RÉDUITE POUR RÉSINES RÉACTIVES STABLES AU STOCKAGE

(30) Priorität: 12.11.2020 EP 20207077
(43) Veröffentlichungstag der Anmeldung: 20.09.2023
(73) Patentinhaber: Röhm GmbH, 64295 Darmstadt (DE)
(72) Erfinder: KLEIN, Alexander, 55435 Gau-Algesheim (DE); LOTZ, Janos, 63571 Gelnhausen (DE); SCHOLL, Sybille, 63517 Rodenbach (DE); KIZEWSKI, Ingrid, 63457 Hanau (DE)
(74) Vertreter: Röhm Patent Association
(86) Internationale Anmeldenummer: PCT/EP2021/080291
(87) Internationale Veröffentlichungsnummer: WO 2022/101048

(56) Entgegenhaltungen:
- DE-A1- 102011 017 686
- DE-A1- 19 706 064
- JP-A- 2008 056 832

## Beschreibung

### Gebiet der Erfindung

Gebiet der Erfindung ist die Herstellung von Reaktionsharzen, insbesondere (Meth)acrylatharzen, wie sie als Komponente beispielsweise in 2K-System, welche als Straßenmarkierung, Bodenbeschichtung oder Dichtstoff eingesetzt werden, Anwendung finden. Das neuartige Verfahren zeichnet sich dabei insbesondere dadurch aus, dass durch dessen Einsatz eine höhere Produktsicherheit und Stabilität sowohl bei der Herstellung als auch bei der Lagerung und Transport bewirkt werden kann.

### Stand der Technik

Aus dem Stand der Technik sind zahlreiche, auf unterschiedlichen Konzepten basierende (Meth)acrylatharze bekannt. Diese können in sehr unterschiedlichen Anwendungsgebieten wie Straßenmarkierungen, Bodenbeschichtungen, Dach- oder Brückenbeschichtungen, Metallbeschichtung wie Korrosionsschutz- oder Intumeszenzbeschichtungen sowie Kleb- und Dichtstoffe zum Einsatz kommen.

Unter (Meth)acrylatharze versteht man Lösungen von Polymeren wie beispielsweise Poly(meth)acrylaten in monomeren (Meth)acrylsäureestern. Sie enthalten in der Regel weitere Additive und Hilfsstoffe. Ein wichtiger Bestandteil sind die so genannten Aktivatoren, die auch als Beschleuniger bezeichnet werden. Diese Komponente lösen bei Zugabe von Initiatoren, wie z.B. Peroxiden, eine Polymerisation des Monomeranteils im (Meth)acrylatharz aus. Die Zugabe von Initiatoren zur Aushärtung von (Meth)acrylatharzen erfolgt z.B. direkt am Ort der Verwendung, z.B. auf einer Baustelle, statt.

Die Komponenten der (Meth)acrylatharze werden in der Regel nicht direkt nach ihrer Herstellung verwendet und müssen deshalb über längere Zeit ausreichend lagerstabil sein. Sie werden dazu nach der Herstellung oftmals über weite Wegstrecken, bis hin als interkontinentale Seefracht transportiert. Eine möglichst hohe Lagerstabilität von (Meth)acrylatharzen, insbesondere auch bei hohen Temperaturen, ist einer aus Qualitätsgründen sowie als auch aus Sicherheitsaspekten essentiell. Darüber hinaus ist es mit derartig lagerstabilen (Meth)acrylatharzen möglich auf aufwendigen Temperatur-kontrollierten Transport und Temperatur-kontrollierte Lagerung zu verzichten. Eine unkontrollierte Polymerisation bei Herstellung, Transport oder Lagerung muss daher vermieden werden.

(Meth)acrylatharze werden in chemischen Betrieben üblicherweise durch Auflösen von Polymeren, z.B. auf (Meth)acrylatbasis, in (Meth)acrylatmonomergemischen und optionalen Vermischen mit Additiven, Beschleuniger und weiteren Zusatzstoffen hergestellt. Üblicherweise erfolgt der Lösevorgang des Polymers und das Vermischen mit den weiteren Einsatzstoffe bei einer Temperatur zwischen 40 und 70 °C.

Bevorzugt werden Polymergranulate oder bevorzugt Suspensionspolymerisate, die auch als Perlpolymerisate bezeichnet werden, bei der Reaktionsharzherstellung verwendet. Die Suspensionspolymerisate haben den Vorteil, dass sie in der Regel eine geringe Teilchengröße, typischerweise kleiner 0,8 mm, aufweisen. So kann ein schnelles Auflösen dieser kleinen Teilchen in den (Meth)acrylatmonomergemischen gewährleistet werden. Feste Substanzpolymerisate wie Granulate müssten erst in aufwendigen Zerkleinerungsprozessen vorbereitet werden, um bei der Reaktionsharzherstellung eingesetzt werden zu können.

Kurzkettige (Meth)acrylsäureester, wie beispielsweise Methylmethacrylat, sind leicht entzündlich und besitzen bereits bei niedrigen Temperaturen einen ausreichenden Dampfdruck zur Bildung einer explosionsfähigen Atmosphäre. In der Praxis werden daher Produktionskessel bei dem Herstellprozess von (Meth)acrylatharzen mit Sauerstoff-armer Luft oder gar reinem Schutzgas, z.B. Stickstoff überlagert. Eine Atmosphäre mit niedrigem Sauerstoffgehalt hat jedoch negative Auswirkungen auf die Stabilität von Reaktionsharzen. Sauerstoff wirkt auf die Polymerisationsreaktion von (Meth)acrylsäureestern inhibierend, da die Anlagerung von Sauerstoff an ein radikalisches Kettenende mit einer höheren Geschwindigkeit erfolgt als die Anlagerung eines Monomers.

Die bei der Reaktionsharzherstellung verwendeten Polymere auf (Meth)acrylatbasis werden ihrerseits in separaten Suspensionspolymerisations- oder Substanzpolymerisationsprozessen hergestellt. Bei diesen Prozessen werden Monomere unter Verwendung von Peroxiden als Initiatoren, kontrolliert polymerisiert. Hilfreiche Hinweise finden sich hinsichtlich der Substanzpolymerisation bei Houben-Weyl, Band E20, Teil 2 (1987), Seite 1145ff. Die Suspensionspolymerisation wird dort auf Seite 1149ff beschrieben.

In den hergestellten Suspensions- oder Substanzpolymerisaten befinden sich im Allgemeinen noch Restanteile an Peroxiden. Dieser Restgehalt wird bei den entsprechenden Herstellungsprozessen maßgeblich durch das eingesetzte Peroxid, das Temperaturniveau und Verweildauer bei den entsprechenden Temperaturen bestimmt. Mit Hinblick auf die Herstellung, Transport und Lagerung sind Reste von Peroxiden, welche z.B. innerhalb einer Temperaturspanne von 70 bis 100 °C eine Halbwertszeit von einer Stunde aufweisen, besonders kritisch. Diese Peroxide können bei erhöhten Temperaturen, wie z.B. bei 40 bis 70 °C bei der Reaktionsharzherstellung, zu einer unkontrollierten Polymerisation führen. Bei Transport und Lagerung zerfallen Reste solcher Peroxide ebenfalls im Laufe der Zeit zu Radikalen, welche ihrerseits ebenfalls eine unkontrollierte Polymerisation auslösen können.

Die US 28,337,53 offenbart zwar, dass der Restperoxidgehalt in kommerziell erhältlichen Acrylpolymeren normalerweise nicht ausreichen würde, um eine Polymerisation von zugesetzten Monomeren bei niedriger Temperatur, z.B. unterhalb von 50 °C, zu induzieren. Angaben zu dem üblicherweise vorhandenen Restperoxidgehalten in kommerziellen Produkten werden dabei jedoch nicht gemacht und die Erfahrung zeigt, dass durchaus noch ein Restrisiko besteht.

Auch die DE 197 06 064 offenbart, dass handelsübliche PMMA-Pulver bzw. Suspensionspolymerisate noch Restgehalte aktiver Peroxidgruppen ausweisen können. Diese werden hier am Beispiel des Dibenzoylperoxids mit einem Bereich zwischen 0,24 und 45 mg/g angegeben. Dies entspricht 0,99 bis 186 mmol/kg Peroxid im Polymer und wurde mit einer iodometrischen Titration ermittelt. Dabei wird auch hier keine negativen Auswirkungen auf die Lagerstabilität von Monomer/Polymer-Gemischen mit diesen Restgehalten erwartet.

Bei der Herstellung der Suspensionspolymerisate beträgt das Temperaturniveau während der Polymerisation nach dem Stand der Technik in DE 102009027620A1 am Beispiel von Initiierung mit Lauroylperoxid 65 bis 90 °C. Nach Abschluss der eigentlichen Polymerisation bei einem Umsatz größer 99 % der eingesetzten Monomere wird das Polymer aus der Suspension abgetrennt und anschließend in einem Trocknungsprozess, z.B. in einer Wirbelschicht, getrocknet. In der Praxis befinden in solchen Polymeren noch Anteile an Restperoxid aus der Herstellung, welche bei Verwendung zur Herstellung von Reaktionsharzen, insbesondere bei Inertisierung des Mischkessels, ein relevantes Restrisiko einer unerwünschten Polymerisation aufweisen können. Die JP 2008 056 832 A offenbart eine mit aktiver Energiestrahlung härtende Zusammensetzung, die als Bindemittel und Klebstoff für Tinte und ausgeformte Produkte verwendet wird, die eine ethylenisch ungesättigte Gruppe enthaltende Verbindung enthält und einen spezifischen Peroxidgehalt aufweist.

Zusammengefasst ist festzustellen, dass selbst wenn einige Dokumente des Standes der Technik zu dem Schluss kommen, dass das Risiko, welches sich aus den Restanteilen Peroxid in Suspensionspolymerisaten für die Lagerung von Reaktionsharzen auf Basis von (Meth)acrylathen, äußerst gering sei, ist doch festzustellen, dass selbst dieses minimale Risiko in der Praxis durchaus zu Fehlchargen und nach Lagerung nicht mehr verwendbaren Produkten führen kann.

### Aufgaben

Daher war es in Hinblick auf diesen Stand der Technik und den Erfahrungen aus der Praxis Aufgabe der vorliegenden Erfindung, bei der Verwendung von Polymerrohstoffen mit Restperoxidgehalten in der Herstellung, und insbesondere bei Transport und Lagerung von (Meth)acrylatharzen das Restrisiko einer ungewollten Polymerisation weiter zu minimieren. Insbesondere war es Aufgabe, bei der Herstellung der Harze bei erhöhten Temperaturen und aufgrund von Explosionsschutzanforderungen unter sauerstoffarmer Gasphase, bzw. in einer Inertgasatmosphäre eine ungewollte, wenn auch nur partielle Polymerisation zu unterbinden.

Weiterhin bestand die Aufgabe, auch bei Lagerung und/oder Transport der Einzelkomponenten der Reaktionsharze bei eventuell auftretenden erhöhten Temperaturen eine solche Polymerisation der Reaktionsharze zu vermeiden.

Damit lag der vorliegenden Erfindung insbesondere die Aufgabe zugrunde, ein neuartiges Reaktionsharz auf (Meth)acrylatbasis zur Verfügung zu stellen, welches auch bei hohen Anforderungen an den Explosionsschutz in gleichmäßiger Qualität und gleichzeitig ohne die Gefahr einer frühzeitigen Polymerisation hergestellt werden kann und gleichfalls auch nach der Herstellung über eine hohe Lagerstabilität, auch bei erhöhten Temperaturen verfügt.

Weitere nicht explizit aufgeführte Aufgaben können sich aus dem Stand der Technik, der Beschreibung, den Beispielen oder dem Gesamtzusammenhang der Anmeldung ergeben.

### Lösung

Die Aufgaben wurden durch Bereitstellen eines neuartigen Verfahrens zur Herstellung von lagerstabilen Reaktionsharzen auf (Meth)acrylatbasis gelöst. Bei diesem Verfahren werden mindestens eine Polymerkomponente und eine Monomerkomponente unter einer Gasphase unter Rühren miteinander gemischt werden, wobei sich mindestens 90 Gew%, bevorzugt mindestens 99 Gew% der Polymerkomponente in der Monomerkomponente lösen. Das Verfahren ist dabei dadurch gekennzeichnet, dass die Gasphase einen Sauerstoffgehalt zwischen 3 und 8 Vol% aufweist. Ferner weist in diesem Verfahren die Polymerkomponente vor dem Mischen mit der Monomerkomponente einen Restgehalt an Peroxid von maximal 0,375 mmol, bevorzugt maximal 0,25 mmol, Peroxid pro Kilogramm auf

Die maximalen Mengen Peroxid entsprechen z.B. im Falle des Lauroylperoxids beispielsweise bevorzugt maximal ca. 150 Gew-ppm, besonders bevorzugt maximal ca. 100 Gew-ppm Lauroylperoxid.

Sehr überraschend lassen sich mit diesem geringen Gehalt an Peroxid besonders lagerstabile Reaktionsharze herstellen.

Es wurde gefunden, dass der Peroxidgehalt bei der Polymerherstellung durch einen Nachheizschritt reduziert werden kann. Dieser nach der eigentlichen Polymerisation folgende zusätzliche Nachheizschritt wird bei gleicher oder vorzugsweise höherer Temperatur als der eigentliche Polymerisationsprozess durchgeführt, so dass die Menge an verbleibendem Restperoxid auf weniger als 0,375 mmol/kg Polymer reduziert wird.

Beispielsweise wird bei der Perlpolymerisation mit Verwendung von Lauroylperoxid (1 Stunden-Halbwertstemperatur, bei der 50% des Initiators binnen 1 h zerfallen sind = 79°C) als Initiator die Suspension vor der Trocknung vorzugsweise auf eine Temperatur aufgeheizt, die mindestens 8°C höher als die 1 Stunden-Halbwertstemperatur ist und für mindestens 90 min auf diesem Temperaturniveau gehalten. Damit wird der Restperoxidgehalt auf maximal 0,375 mmol/kg im Polymer bzw. 150 ppm Lauroylperoxid reduziert. Erfolgt der Nachheizschritt mindestens 11°C oberhalb der 1 Stunden-Halbwertstemperatur des Initiators für mindestens 60 min, bzw. mindestens 90 min, so wird der Restperoxidgehalt auf maximal 150 ppm, bzw. 100 ppm Lauroylperoxid reduziert.

In analoger Weise kann im Falle einer weniger bevorzugten Substanzpolymerisation ebenfalls ein zusätzlicher Nachheizschritt nach der eigentlichen Polymerisationsreaktion erfolgen. In diesem Fall wird durch eine Wärmebehandlung das vorhandenes Restperoxid auf maximal 0,375 mmol/kg Polymer reduziert. Ebenfalls wird bei gleicher Temperatur der Polymerisation oder vorzugsweise höherer Temperatur nachgeheizt.

Bezüglich der Gasphase gibt es mehrere Möglichkeiten, den erfindungsgemäß einzustellenden Sauerstoffgehalt zu realisieren. So können Schutzgase wie Stickstoff oder Argon mit der entsprechenden Menge reinen Sauerstoffs versetzt werden. Bevorzugt wird jedoch Luft zusammen mit einem Schutzgas eingeleitet, um die entsprechende Sauerstoff-Konzentration zu realisieren. Im Falle der Zuleitung von Stickstoff werden so Gaszusammensetzungen erreicht, die mindestens 90 Vol% Stickstoff aufweisen. Sollte Argon als Schutzgas verwendet werden enthält die Gasphase mindestens 12 Vol% Argon.

In einer weiteren, wenn auch weniger bevorzugten Alternative, kann dem Reaktor auch CO₂ zugeleitet oder als Trockeneis zugegeben werden. In diesem Fall enthält die Gasphase mindestens 12 Vol% Kohlendioxid.

Bevorzugt handelt es sich bei den eingesetzten Polymerkomponenten um Poly(meth)acrylate. Besonders bevorzugt ist das eingesetzte Polymer ein Suspensionspolymerisat.

Es hat sich dabei als sinnvoll erwiesen, wenn das Suspensionspolymerisat bei der Herstellung mit Lauroylperoxid initiiert wurde, jedoch sind auch andere Peroxide einsetzbar, insbesondere solche mit ähnlichen Kombinationen aus Zerfallstemperatur und -zeit.

Bei der Monomerkomponente handelt es sich wiederum bevorzugt um Methacrylate, Acrylate oder Mischungen aus Methacrylaten und/oder Acrylaten. Die im Rahmen dieser Erfindung öfter gebrauchte Formulierung (Meth)acrylate steht dabei verkürzend für Methacrylate, Acrylate oder Mischungen aus Methacrylaten und/oder Acrylaten. Analoges gilt für den Ausdruck Poly(meth)acrylate.

Bei den in dem Reaktionsharz enthaltenden Monomeren handelt es sich insbesondere um Verbindungen, die ausgewählt sind aus der Gruppe der (Meth)acrylate wie beispielsweise Alkyl(meth)acrylate von gradkettigen, verzweigten oder cycloaliphatischen Alkoholen mit 1 bis 40 C-Atomen, wie zum Beispiel Methyl(meth)acrylat, Ethyl(meth)acrylat, n-Butyl(meth)acrylat, 2-Ethylhexyl(meth)acrylat, Stearyl-(meth)acrylat, Lauryl(meth)acrylat; Aryl(meth)acrylate wie zum Beispiel Benzyl(meth)acrylat; Mono(meth)acrylate von Ethern, Polyethylenglycolen, Polypropylenglycolen oder deren Mischungen mit 5 bis 80 C-Atomen, wie beispielsweise Tetrahydrofurfury(lmeth)acrylat, Methoxy(m)ethoxyethyl(meth)acrylat, Benzyloxymethyl(meth)acrylat, 1-Ethoxybutyl(meth)acrylat, 1-Ethoxyethyl(meth)acrylat, Ethoxymethyl(meth)acrylat, Poly(ethylenglycol)methylether(meth)acrylat und Poly(propylenglycol)-methylether(meth)acrylat, zusammen.

Neben diesen (Meth)acrylaten kann die Monomerkomponente auch weitere ungesättigte Monomere aufweisen, die mit den zuvor genannten (Meth)acrylaten und mittels freiradikalischer Polymerisation copolymerisierbar sind. Hierzu gehören unter anderem 1-Alkene oder Styrole. Im Einzelnen wird das Poly(meth)acrylat nach Anteil und Zusammensetzung zweckmäßigerweise im Hinblick auf die gewünschte technische Funktion gewählt werden.

Als Bestandteile der Monomerkomponente eignen sich auch zusätzliche Monomere mit einer weiteren funktionellen Gruppe, wie a,ß-ungesättigte Mono- oder Dicarbonsäuren, beispielsweise Acrylsäure, Methacrylsäure oder Itaconsäure; Ester der Acrylsäure oder Methacrylsäure mit zweiwertigen Alkoholen, beispielsweise Hydroxyethyl(meth)acrylat oder Hydroxypropyl(meth)acrylat; Acrylamid oder Methacrylamid; oder Dimethylaminoethyl(meth)acrylat. Weitere geeignete Bestandteile von Monomergemischen sind beispielsweise Glycidyl(meth)acrylat oder silylfunktionelle (Meth)acrylate.

Bevorzugt enthalten die erfindungsgemäß eingesetzten Polymerkomponente und Monomerkomponente bezogen auf die Summe aus Acrylat- und Methacrylatgruppen maximal 5 Gew% Acrylat-Gruppen und Acrylat-Wiederholungseinheiten. Besonders bevorzugt weist die Mischung gar keine Acrylat-Gruppen und Acrylat-Wiederholungseinheiten auf.

Die Polymerkomponente kann zusätzliche funktionelle Gruppen zur Haftvermittlung, wie beispilesweise in Form von Hydroxygruppen, oder zur Copolymerisation in einer optionalen Vernetzungsreaktion, wie beispielsweise in Form von Doppelbindungen, aufweisen. Bevorzugt weist die Polymerkomponente aber keine Doppelbindungen auf.

Besonders bevorzugt liegt beim Mischen eine Zusammensetzung vor, die folgende Komponenten aufweist:
0 Gew% bis 30 Gew% Vernetzer,
20 Gew% bis 85 Gew% Monomerzusammensetzung,
0 Gew% bis 60 Gew% Urethan(meth)acrylate,
10 Gew% bis 40 Gew% Polymerzusammensetzung,
0 Gew% bis 5 Gew% Zuschlagsstoffe, enthalten einzelne oder mehrere ausgewählt aus Paraffinen, Additiven, Stabilisatoren, Pigmenten, Farbstoffen und/oder Hilfsstoffen und
0 Gew%, beispielsweise mindestens 1,1,5 Gew% bis 10 Gew% Beschleuniger.

Wenn Vernetzer vorliegen, werden diese bevorzugt in einer Mindestkonzentration von 0,5 Gew% eingesetzt.

Insbesondere ist dabei eine Zusammensetzung bevorzugt, die folgende Inhaltsstoffe aufweist:
- 1,0 Gew% bis 20 Gew%, besonders bevorzugt 1,5 Gew% bis 15 Gew% Vernetzer, bevorzugt mehrfunktionelle (Meth)acrylate, ganz besonders bevorzugt di-, tri- oder tetra-(Meth)acrylate,
- 25 Gew% bis 75 Gew%, besonders bevorzugt 30 bis 40 Gew% (Meth)acrylate und/oder mit (Meth)acrylaten copolymerisierbare Monomere,
- 0 Gew% bis 45 Gew%, besonders bevorzugt bis 30 Gew% Urethan(meth)acrylate,
- 10 Gew% bis 35 Gew%, besonders bevorzugt 15 Gew% bis 25 Gew% Poly(meth)acrylate,
- gegebenenfalls weitere Hilfsstoffe und
- 0,5 Gew% bis 5 Gew%, besonders bevorzugt 2 Gew% bis 4 Gew% Beschleuniger.

Bei dem Beschleuniger handelt es sich bevorzugt um ein tertiäres Amin oder um ein tertiäres organisches Phosphit. Bei den tertiären Aminen handelt es sich dabei in der Regel um symmetrische tertiäre, aromatische Amine, wie sie aus dem Stand der Technik bekannt sind, enthalten. Als besagte symmetrische tertiäre, aromatische Amine seien zum Beispiel N,N-Dimethyl-p-toluidin, N,N-bis-(2-Hydroxyethyl)-p-toluidin oder N,N-bis-(2-Hydroxypropyl)-p-toluidin genannt.

Ein optionaler Bestandteil des erfindungsgemäßen Reaktionsharzes sind die Vernetzer. Insbesondere mehrfunktionelle Methacrylate wie Allyl(meth)acrylat. Besonders bevorzugt sind di- oder tri-(Meth)acrylate wie beispielsweise 1,4-Butandioldi(meth)acrylat,
Poly(urethan)(meth)acrylate Tetraethylenglycoldi(meth)acrylat, Triethylenglycoldi(meth)acrylat oder Trimethylolpropantri(meth)acrylat.

Unter den optional enthaltenen Urethan(meth)acrylaten versteht man im Rahmen dieser Erfindung Verbindungen, die (Meth)acrylat-Funktionalitäten aufweisen, die über Urethangruppen miteinander verknüpft sind. Sie sind durch die Umsetzung von Hydroxyalkyl(meth)acrylaten mit Polyisocyanaten und Polyoxyalkylenen, die mindestens zwei Hydoxyfunktionalitäten aufweisen, erhältlich. Anstelle von Hydroxyalkyl(meth)acrylaten können auch Ester der (Meth)acrylsäure mit Oxiranen, wie beispielsweise Ethylen- oder Propylenoxid, oder entsprechenden Oligo- bzw. Polyoxiranen verwendet werden. Einen Überblick beispielsweise über Urethan(meth)acrylate mit einer Funktionalität größer zwei findet man in DE 199 02 685. Ein kommerziell erhältliches Beispiel hergestellt aus Polyolen, Isocyanaten und hydroxyfunktionellen (Meth)acrylaten ist EBECRYL 210-5129 der Allnex. Urethan(meth)acrylate erhöhen in einem Reaktionsharz, ohne größere Temperaturabhängigkeit, die Flexibilität, die Reißfestigkeit und die Reißdehnung. Überraschend wurde gefunden, dass selbst Urethanacrylate mit dem neuen Härtungssystem in höheren Gewichtsanteilen problemlos klebfrei aushärten. Dies eröffnet die Möglichkeit unter weitgehendem Verzicht auf Acrylatmonomere mit typischerweise niedriger Glasübergangstemperatur flexible Reaktionsharze herzustellen, wie sie für z. B. Fahrbahnmarkierungen oder Abdichtungssysteme benötigt werden.

Wie aus dem technischen Gebiet der Reaktionsharze, insbesondere der (Meth)acrylatharze bekannt, können auch bei diesem erfindungsgemäßen Verfahren die Polymerkomponente und die Monomerkomponente zusätzlich mit Additiven und/oder Hilfsstoffen, insbesondere mit Paraffinen, Additiven, Stabilisatoren und Inhibitoren, Pigmenten, Farbstoffen und/oder Hilfsstoffen vermischt werden.

Unter Additiven oder Hilfsstoffen versteht man dabei vor allem Regler, Weichmacher, Stabilisatoren und Inhibitoren, Wachse und/oder Öle, sowie Entschäumer, Rheologieadditive, Netz-, Dispergier- und Verlaufshilfsmittel. Die Paraffine werden zugesetzt, um eine Inhibierung der Polymerisation durch den Sauerstoff der Luft zu verhindern. Dazu können mehrere Paraffine mit unterschiedlichen Schmelzpunkten in unterschiedlichen Konzentrationen verwendet werden. Als sehr günstig hat es sich erwiesen, wenn das erfindungsgemäße 2K-Reaktionsharz zusätzlich 0,3 Gew% bis 3 Gew% eines oder mehrerer Paraffine enthält. Diese Paraffine zeichnen sich dabei dadurch aus, dass deren Erstarrungspunkt nach DIN-ISO 2207 im Temperaturbereich von 35 °C bis 75 °C liegt.

Als Regler können alle aus der radikalischen Polymerisation bekannten Verbindungen verwendet werden. Bevorzugt werden Mercaptane wie n-Dodecylmercaptan eingesetzt. Als Weichmacher werden vorzugsweise Ester, Polyole, Öle, niedermolekulare Polyether oder Phthalate eingesetzt.

Netz-, Dispergier- und Verlaufshilfsmittel werden vorzugsweise ausgewählt aus der Gruppe der Alkohole, Kohlenwasserstoffe, Glycolderivate, Derivate von Glycolsäureestern, Essigsäureestern und Polysiloxanen, Polyether, Polysiloxane, Polycarbonsäuren, gesättigte und ungesättigte Polycarbonsäureaminamide eingesetzt.

Als Rheologieadditive werden vorzugsweise Polyhydroxycarbonsäureamide, Harnstoffderivate, Salze ungesättigter Carbonsäureester, Alkylamoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet. Entschäumer werden vorzugsweise ausgewählt aus der Gruppe der Alkohole, Kohlenwasserstoffe, paraffinbasischen Mineralöle, Glycolderivate, Derivate von Glycolsäureestern, Essigsäureestern und Polysiloxanen eingesetzt.

Ebenso können UV-Stabilisatoren eingesetzt werden. Vorzugsweise werden die UV-Stabilisatoren ausgewählt aus der Gruppe der Benzophenonderivate, Benzotriazolderivate, Thioxanthonatderivate, Piperidinolcarbonsäureesterderivate oder Zimtsäureesterderivate. Aus der Gruppe der Stabilisatoren bzw. Inhibitoren werden vorzugsweise substituierte Phenole, Hydrochinonderivate und stabilisierte Radikale, wie z.B. 4-Hydroxy-2,2,6,6-tetramethylpiperidinyloxyl (TEMPOL), eingesetzt. In der Praxis ist die im Reaktionsharz sinnvoll einsetzbare Zusatzmenge nach oben begrenzt, da es sonst bei der bestimmungsgemäßen Aushärtung, insbesondere bei niedrigen Temperaturen, zu einer unvollständigen Aushärtung kommt. Es können auch Kombinationen von mehreren unterschiedlichen Stabilisatoren in Reaktionsharzen eingesetzt werden, bevorzugt sind hierbei Kombinationen von substituierten Phenolen - bevorzugt in einer Konzentration zwischen 100 und 1000 ppm - und stabilisierten Radikalen, wie z.B. TEMPOL - bevorzugt in einer Konzentration zwischen 15 und 150 ppm.

Für einige Anwendungen hat es sich als sehr günstig erwiesen, wenn das Produkt des erfindungsgemäßen Verfahrens zusätzlich 0,3 Gew% bis 3 Gew% eines oder mehrerer Paraffine enthält. Diese Paraffine zeichnen sich dabei dadurch aus, dass deren Erstarrungspunkt nach DIN-ISO 2207 im Temperaturbereich von 35 °C bis 75 °C liegt.

Für verschiedene Einsatzgebiete der erfindungsgemäß hergestellten Reaktionsharze, wie beispielsweise als Fahrbahnmarkierungen, insbesondere als Linien, Balken oder Symbole, oder Flächenmarkierungen für die Kennzeichnung von z.B. Radwegen oder Busspuren oder Parkplätzen werden als Hilfs- und Zusatzstoffe vorzugsweise Farbstoffe zugegeben. Besonders bevorzugt sind weiße, rote, blaue, grüne und gelbe anorganische Pigmente, besonders bevorzugt sind weiße Pigmente wie Titandioxid.

Die erfindungsgemäß hergestellten Reaktionsharze können in diversen technischen Gebieten Anwendung finden. Beispiele dafür sind Straßenmarkierungen, Fußbodenbeläge, bevorzugt für industrielle Anwendungen, zur Herstellung von Gussteilen, zur Abdichtung oder Beschichtung von Dächern, Brücken oder deren Fugen, insbesondere als Abdichtungsmembran, zur Brückenbeschichtung allgemein, als Abdichtungsmembran auf Dächern, zur Herstellung von Platten, z.B. zur Weiterverwendung als Arbeitsplatte, zur Herstellung von Schutzbeschichtungen insbesondere für Metalloberflächen, als Kanalharz, zur Herstellung von Sanitärobjekten, zur Herstellung von Klebstoffen, zur Rissverfüllung z.B. in Gebäuden, oder zur Verwendung im Bereich der Orthopädie.

### Beispiele

Nachstehend soll die Erfindung an Vergleichsbeispielen und ausgewählten Ausführungsbeispielen näher erläutert werden.

Die Restgehalte an Peroxid im Polymer wurden mittels Hochleistungsflüssigkeitschromatographie (HPLC) ermittelt.

Probenpräparation: 2,0 g (Meth)acrylat-Polymer wurde bei Raumtemperatur in 5,0 mL Dichlormethan vollständig gelöst. Im Anschluss wurden 70 mL n-Hexan zugegeben, sodass (Meth)acrylat-Polymer wieder ausgefällt wurden. Nach einer Filtration wurde das Filtrat unter Vakuum getrocknet. Der verbleibende Rückstand wurde in Cyclohexan aufgenommen und mittels HPLC analysiert.

Als stationäre Phase in der HPLC wurde ein chemisch modifiziertes Kieselgel verwendet (C18-Säule). Die Detektion erfolgte mittels UV-VIS-Detektor (220 nm). Die Kalibrierung und Validierung der HPLC erfolgte mit Lauroylperoxid/Cyclohexan-Standardlösungen (externer Standard).

### Herstellung von Perlpolymerisat mit Einstellung des Restperoxidgehaltes

Zur Herstellung eines Perlpolymerisats wurde zunächst eine Aluminiumhydroxid-Pickering-Stabilisator-Lösung analog der Beschreibung aus EP 12 196 42 (Beispiel 1) hergestellt. In einen 5L Glasreaktor, ausgestattet mit Inter-MIG-Rührer und Rückflusskühler wurden 3200 mL Pickering-Stabilisator-Lösung vorgelegt, der Rührer auf eine Drehzahl von 300 Umdrehungen pro Minute eingestellt und auf eine Manteltemperatur von 40 °C aufgeheizt. In einem Becherglas wurden 960 g (60 Gew%) n-Butylmethacrylat, 640 g (40 Gew%) Methylmethacrylat, 8,0 g Lauroylperoxid und 12,30 g 2-Ethylhexylthioglykolat gemischt und unter Rühren homogenisiert. Diese Monomerstammlösung wurde in den Reaktor gepumpt und bei einer Reaktor-Innentemperatur von 76 °C (Polymerisationstemperatur) für 110 Minuten (Polymerisationsdauer) unter Rühren polymerisiert. Im Anschluss an die Polymerisation wurden die erhaltenen Suspensionspolymerisate thermisch nachbehandelt, wie in nachfolgender Tabelle dargestellt. Durch die zeitliche Länge und das Temperaturniveau der thermischen Nachbehandlung konnten verschiedene Restgehalte an Lauroylperoxid im Perlpolymerisat eingestellt werden:

| Ansatz Herstellung Perlpolymerisat | Temperatur thermische Nachbehandlung | Dauer thermische Nachbehandlung | Restgehalt Lauroylperoxid |
|---|---|---|---|
| 1 | 85 °C | 80 min | 200 ppm |
| 2 | 87 °C | 120 min | 80 ppm |
| 3 | 85 °C | 60 min | 250 ppm |

Der jeweilige Ansatz wurde im Anschluss auf 45 °C abgekühlt und anschließend der Stabilisator durch Zusatz von 50%iger Schwefelsäure in wasserlösliches Aluminiumsulfat überführt. Durch eine Filter-Nutsche wurde die Mutterlauge von den Polymerperlen abgetrennt, mit vollentsalzten Wasser gewaschen und die Polymerperlen in einem Wirbelbetttrockner bei einer Zulufttemperatur von 70 °C bis zu einer Restfeuchte von ca. 0,5 Gew% getrocknet.

### Vergleichsbeispiel 1

In einen 2000 mL fassenden Doppelmantel-Glasreaktor, der mit einem Rückflusskühler und mit einem mechanischen Rührwerk (Anker) ausgestattet war und mehrere Eingänge und eine Gaszufuhr aufwies, wurden 515,1 g Methylmethacrylat (stabilisiert mit 5 ppm 2,6-Di-tert-Butyl-4-methylphenol), 510,0 g n-Butylacrylat (stabilisiert mit 5 ppm 2,6-Di-tert-Butyl-4-methylphenol), 40,0 g Triethylenglycoldimethacrylat (stabilisiert mit 250 ppm 2,6-Di-tert-Butyl-4-methylphenol), 0,900 g 2,6-Di-tert-Butyl-4-methylphenol, 20,0 g Sasolwax 5603 (ein Olefinwachs) und 14,0 g N,N-Bis-(2-hydroxypropyl)-p-toluidin gegeben und das Gemisch gerührt.

Im Anschluss wurde der Reaktor mit einem Gasgemisch, bestehend aus 96 % Stickstoff und 4 % Sauerstoff, gespült und mit dem Gasgemisch überlagert.

Danach wurden 400,0 g Perlpolymerisat mit spezifischen Restgehalt von 200 Gew-ppm Lauroylperoxid bzw. entsprechend 0,50 mmol Lauroylperoxid pro Kilogramm Perlpolymerisat, unter starkem Rühren zugegeben. Der Doppelmantel wurde anschließend mit 60 °C Warmwasser temperiert bis eine Temperatur der zugegebenen Komponenten von 55 °C erreicht wurde. Es wurde solange gerührt, bis alle Bestandteile gelöst waren, was ca. 75 min nach Zugabe des Perlpolymerisat der Fall war. Das Harz wurde anschließend unter Rühren auf 23 °C abgekühlt.

### Beispiel 1

In einen 2000 mL fassenden Doppelmantel-Glasreaktor, der mit einem Rückflusskühler und mit einem mechanischen Rührwerk (Anker) ausgestattet war und mehrere Eingänge und eine Gaszufuhr aufwies, wurden 515,1 g Methylmethacrylat (stabilisiert mit 5 ppm 2,6-Di-tert-Butyl-4-methylphenol), 510,0 g n-Butylacrylat (stabilisiert mit 5 ppm 2,6-Di-tert-Butyl-4-methylphenol), 40,0 g Triethylenglycoldimethacrylat (stabilisiert mit 250 ppm 2,6-Di-tert-Butyl-4-methylphenol), 0,900 g 2,6-Di-tert-Butyl-4-methylphenol, 20,0 g Sasolwax 5603 (ein Olefinwachs) und 14,0 g N,N-Bis-(2-hydroxypropyl)-p-toluidin gegeben und das Gemisch gerührt.

Im Anschluss wurde der Reaktor mit einem Gasgemisch, bestehend aus 96 % Stickstoff und 4 % Sauerstoff, gespült und mit dem Gasgemisch überlagert.

Danach wurden 400,0 g Perlpolymerisat mit spezifischen Restgehalt von 80 Gew-ppm Lauroylperoxid bzw. entsprechend 0,20 mmol Lauroylperoxid pro Kilogramm Perlpolymerisat unter starkem Rühren zugegeben. Der Doppelmantel wurde anschließend mit 60 °C Warmwasser temperiert bis eine Temperatur der zugegebenen Komponenten von 55 °C erreicht wurde. Es wurde solange gerührt, bis alle Bestandteile gelöst waren, was ca. 75 min nach Zugabe des Perlpolymerisat der Fall war. Anschließend wurde das Harz unter Rühren auf 23 °C abgekühlt. Vergleich der Lagerstabilität bei 90°C der Harze aus Beispiel 1 und Beispiel 2

Je 90 mL der hergestellten Methacrylatharze wurden zur Überprüfung der Lagerstabilität in 100 mL fassende Glasflaschen gefüllt. Die Glasflaschen wurden verschlossen und bei 90 °C in einem Wärmeschrank gelagert. Die Stabilität der Methacrylatharze wurde mehrmals täglich visuell überprüft.

**Tabelle 1: Ergebnisse Lagerstabilität bei 90 °C**

| **Beispiel** | **Lagerstabilität bei 90 °C** |
|---|---|
| Vergleichsbeispiel 1 | < 1 Tage |
| Beispiel 1 | 5 Tage |

Bei dem Vergleich der Ergebnisse ist die wesentlich höhere Lagerstabilität des erfindungsgemäßen Beispiels 1 auch rein visuell deutlich ersichtlich.

### Vergleichsbeispiel 2

In einen 2000 mL fassenden Doppelmantel-Glasreaktor, der mit einem Rückflusskühler und mit einem mechanischen Rührwerk (Anker) ausgestattet war und mehrere Eingänge und eine Gaszufuhr aufwies, wurden 515,1 g Methylmethacrylat (stabilisiert mit 5 ppm 2,6-Di-tert-Butyl-4-methylphenol), 510,0 g n-Butylacrylat (stabilisiert mit 5 ppm 2,6-Di-tert-Butyl-4-methylphenol), 40,0 g Triethylenglycoldimethacrylat (stabilisiert mit 250 ppm 2,6-Di-tert-Butyl-4-methylphenol), 0,900 g 2,6-Di-tert-Butyl-4-methylphenol, 20,0 g Sasolwax 5603 (ein Olefinwachs) und 14,0 g N,N-Bis-(2-hydroxypropyl)-p-toluidin gegeben und das Gemisch gerührt.

Im Anschluss wurde der Reaktor mit Stickstoff gespült und überlagert.

Hiernach wurden 400,0 g Perlpolymerisat mit spezifischen Restgehalt vom 250 Gew-ppm Lauroylperoxid bzw. entsprechend 0,63 mmol Lauroylperoxid pro Kilogramm Perlpolymerisat unter starkem Rühren zugegeben. Anschließend wurde der Doppelmantel mit 60 °C Warmwasser temperiert bis die Temperatur der zugegebenen Komponenten auf 55 °C gestiegen war. Nach 45 min Rührzeit nach Zugabe des Perlpolymerisats trat eine Polymerisation des Reaktorinhalts auf, was starken Viskositätsanstieg, insbesondere durch Bildung von gelartigen Bestandteilen, ersichtlich war.

### Vergleichsbeispiel 3

In einen 2000 mL fassenden Doppelmantel-Glasreaktor, der mit einem Rückflusskühler und mit einem mechanischen Rührwerk (Anker) ausgestattet war und mehrere Eingänge und eine Gaszufuhr aufwies, wurden 515,1 g Methylmethacrylat (stabilisiert mit 5 ppm 2,6-Di-tert-Butyl-4-methylphenol), 510,0 g n-Butylacrylat (stabilisiert mit 5 ppm 2,6-Di-tert-Butyl-4-methylphenol), 40,0 g Triethylenglycoldimethacrylat (stabilisiert mit 250 ppm 2,6-Di-tert-Butyl-4-methylphenol), 0,900 g 2,6-Di-tert-Butyl-4-methylphenol, 20,0 g Sasolwax 5603 (ein Olefinwachs) und 14,0 g N,N-Bis-(2-hydroxypropyl)-p-toluidin gegeben und das Gemisch gerührt.

Im Anschluss wurde der Reaktor mit Stickstoff gespült und überlagert.

Danach wurden 400,0 g Perlpolymerisat mit spezifischen Restgehalt von 80 Gew-ppm Lauroylperoxid bzw. entsprechend 0,20 mmol Lauroylperoxid pro Kilogramm Perlpolymerisat unter starkem Rühren hinzugegeben. Danach wurde der Doppelmantel mit 60 °C Warmwasser temperiert bis die Temperatur im der zugegebenen Komponenten auf 55 °C gestiegen war. Nach 120 min Rührzeit nach Zugabe des Perlpolymerisats trat eine Polymerisation des Reaktorinhalts auf, was starken Viskositätsanstieg, insbesondere durch Bildung von gelartigen Bestandteilen, ersichtlich war.

**Tabelle 2: Vergleich Produktion Reaktionsharz mit Stickstoffüberlagerung**

| **Beispiel** | **Zeitdauer bis Polymerisation** |
|---|---|
| Vergleichsbeispiel 2 | 45 min |
| Vergleichsbeispiel 3 | 120 min |

Bei dem Vergleich der Ergebnisse ist die wesentlich längere Zeitdauer bis zu einer Polymerisation bei der Harzherstellung unter Stickstoff des Vergleichsbeispiels 3 ersichtlich. Trotzdem zeigt sich, dass ein Mindestanteil Sauerstoff während der Herstellung des Reaktionsharzes wichtig ist.

## Patentansprüche

1. Verfahren zur Herstellung von lagerstabilen Reaktionsharzen auf (Meth)acrylatbasis, bei dem mindestens eine Polymerkomponente und eine Monomerkomponente unter einer Gasphase unter Rühren miteinander gemischt werden, wobei sich mindestens 90 Gew% der Polymerkomponente in der Monomerkomponente lösen, **dadurch gekennzeichnet, dass** die Gasphase einen Sauerstoffgehalt zwischen 3 und 8 Vol% aufweist, und dass die Polymerkomponente vor dem Mischen mit der Monomerkomponente einen Restgehalt an Peroxid von maximal 0,375 mmol Peroxid pro Kilogramm aufweist, wobei der Restgehalt an Peroxid mittels Hochleistungsflüssigkeitschromatographie (HPLC) ermittelt wird.

2. Verfahren gemäß Anspruch 1 **dadurch gekennzeichnet, dass** der Restgehalt an Peroxid in der Polymerkomponente vor dem Mischen maximal 0,25 mmol Peroxid pro Kilogramm Polymer beträgt.

3. Verfahren gemäß Anspruch 1 oder 2, **dadurch gekennzeichnet, dass** es sich bei den eingesetzten Polymerkomponenten um Poly(meth)acrylate handelt

4. Verfahren gemäß mindestens einem der Ansprüche 1 bis 3, **dadurch gekennzeichnet, dass** es sich bei dem eingesetzten Polymer um ein Suspensionspolymerisat handelt.

5. Verfahren gemäß mindestens einem der Ansprüche 1 bis 4, **dadurch gekennzeichnet, dass** das Suspensionspolymerisat bei der Herstellung mit Lauroylperoxid initiiert wurde.

6. Verfahren gemäß mindestens einem der Ansprüche 1 bis 5, **dadurch gekennzeichnet, dass** es sich bei der Monomerkomponente um Methacrylate, Acrylate oder Mischungen aus Methacrylaten und/oder Acrylaten handelt.

7. Verfahren gemäß mindestens einem der Ansprüche 1 bis 6, **dadurch gekennzeichnet, dass** die Polymerkomponente und die Monomerkomponente zusätzlich mit Paraffinen, Additiven, Stabilisatoren, Pigmenten, Farbstoffen und/oder Hilfsstoffen vermischt werden.

8. Verfahren gemäß mindestens einem der Ansprüche 1 bis 7, **dadurch gekennzeichnet, dass** die Gasphase mindestens 90 Vol% Stickstoff aufweist.

9. Verfahren gemäß mindestens einem der Ansprüche 1 bis 7, **dadurch gekennzeichnet, dass** die Gasphase mindestens 12 Vol% Argon und/oder Kohlendioxid aufweist.

10. Verfahren gemäß mindestens einem der Ansprüche 1 bis 9, **dadurch gekennzeichnet, dass** die Polymerkomponente und die Monomerkomponente bezogen auf die Summe aus Acrylat- und Methacrylatgruppen maximal 5 Gew% Acrylat-Gruppen und Acrylat-Wiederholungseinheiten enthält.

11. Verfahren gemäß mindestens einem der Ansprüche 1 bis 10, **dadurch gekennzeichnet, dass** beim Mischen eine Zusammensetzung vorliegt, enthaltend
0 Gew% bis 30 Gew% Vernetzer,
20 Gew% bis 85 Gew% Monomerzusammensetzung,
0 Gew% bis 60 Gew% Urethan(meth)acrylate,
10 Gew% bis 40 Gew% Polymerzusammensetzung,
0 Gew% bis 5 Gew% Zuschlagsstoffe, enthalten einzelne oder mehrere ausgewählt aus Paraffinen, Additiven, Stabilisatoren, Pigmenten, Farbstoffen und/oder Hilfsstoffen
und
0 Gew% bis 10 Gew% Beschleuniger.

12. Verfahren gemäß Anspruch 11 **dadurch gekennzeichnet, dass** es sich bei dem Beschleuniger um ein tertiäres Amin oder um ein tertiäres organisches Phosphit handelt.

## Claims

1. Process for preparing storage-stable (meth)acrylate-based reactive resins in which at least one polymer component and a monomer component are mixed with one another under a gas phase with stirring, with at least 90% by weight of the polymer component dissolving in the monomer component, **characterized in that** the gas phase has an oxygen content of between 3% and 8% by volume, and **in that** the polymer component prior to mixing with the monomer component has a residual peroxide content of at most 0.375 mmol of peroxide per kilogram, the residual peroxide content being determined by means of high-performance liquid chromatography (HPLC).

2. Process according to Claim 1, **characterized in that** the residual peroxide content in the polymer component prior to mixing is at most 0.25 mmol of peroxide per kilogram of polymer.

3. Process according to Claim 1 or 2, **characterized in that** the polymer components used are poly(meth)acrylates.

4. Process according to at least one of Claims 1 to 3, **characterized in that** the polymer used is a suspension polymer.

5. Process according to at least one of Claims 1 to 4, **characterized in that** during the preparation the suspension polymer was initiated with lauroyl peroxide.

6. Process according to at least one of Claims 1 to 5, **characterized in that** the monomer component is methacrylates, acrylates or mixtures of methacrylates and/or acrylates.

7. Process according to at least one of Claims 1 to 6, **characterized in that** the polymer component and the monomer component are additionally mixed with paraffins, additives, stabilizers, pigments, dyes and/or auxiliaries.

8. Process according to at least one of Claims 1 to 7, **characterized in that** the gas phase includes at least 90% by volume of nitrogen.

9. Process according to at least one of Claims 1 to 7, **characterized in that** the gas phase includes at least 120 by volume of argon and/or carbon dioxide.

10. Process according to at least one of Claims 1 to 9, **characterized in that** the polymer component and the monomer component contain at most 5% by weight of acrylate groups and acrylate repeating units, based on the sum total of acrylate and methacrylate groups.

11. Process according to at least one of Claims 1 to 10, **characterized in that** during the mixing a composition is present containing
0% by weight to 30% by weight of crosslinkers,
20% by weight to 85% by weight of monomer composition,
0% by weight to 60% by weight of urethane (meth)acrylates,
10% by weight to 40% by weight of polymer composition,
0% by weight to 5% by weight of additional substances, comprising individual or multiple substances selected from paraffins, additives, stabilizers, pigments, dyes and/or auxiliaries
and
0% by weight to 10% by weight of accelerators.

12. Process according to Claim 11, **characterized in that** the accelerator is a tertiary amine or a tertiary organic phosphite.

## Revendications

1. Procédé de préparation de résines réactionnelles stables à l'entreposage à base de (méth)acrylate, dans lequel au moins un composant polymère et un composant monomère sont mélangés l'un avec l'autre sous une phase gazeuse sous agitation, au moins 90% en poids du composant polymère se dissolvant dans le composant monomère, **caractérisé en ce que** la phase gazeuse présente une teneur en oxygène entre 3 et 8% en volume et **en ce que** le composant polymère présente, avant le mélange avec le composant monomère, une teneur résiduelle en peroxyde d'au maximum 0,375 mmole de peroxyde par kilogramme, la teneur résiduelle en peroxyde étant déterminée par chromatographie liquide à haute performance (HPLC).

2. Procédé selon la revendication 1, **caractérisé en ce que** la teneur résiduelle en peroxyde dans le composant polymère avant le mélange représente au maximum 0,25 mmole de peroxyde par kilogramme de polymère.

3. Procédé selon la revendication 1 ou 2, **caractérisé en ce qu'**il s'agit, pour les composants polymères utilisés, de poly(méth)acrylates.

4. Procédé selon au moins l'une des revendications 1 à 3, **caractérisé en ce qu'**il s'agit, pour le polymère utilisé, d'un polymère en suspension.

5. Procédé selon au moins l'une des revendications 1 à 4, **caractérisé en ce que** le polymère en suspension a été initié au peroxyde de lauroyle lors de la préparation.

6. Procédé selon au moins l'une des revendications 1 à 5, **caractérisé en ce qu'**il s'agit, pour le composant monomère, de méthacrylates, d'acrylates ou de mélanges de méthacrylates et/ou d'acrylates.

7. Procédé selon au moins l'une des revendications 1 à 6, **caractérisé en ce que** le composant polymère et le composant monomère sont en plus mélangés avec des paraffines, des additifs, des stabilisants, des pigments, des colorants et/ou des adjuvants.

8. Procédé selon au moins l'une des revendications 1 à 7, **caractérisé en ce que** la phase gazeuse présente au moins 90% en volume d'azote.

9. Procédé selon au moins l'une des revendications 1 à 7, **caractérisé en ce que** la phase gazeuse présente 12% en volume d'argon et/ou de dioxyde de carbone.

10. Procédé selon au moins l'une des revendications 1 à 9, **caractérisé en ce que** le composant polymère et le composant monomère contiennent, par rapport à la somme de groupes acrylate et méthacrylate, au maximum 5% en poids de groupes acrylates et de motifs récurrents d'acrylate.

11. Procédé selon au moins l'une des revendications 1 à 10, **caractérisé en ce qu'**on est en présence, lors du mélange, d'une composition contenant
0% en poids à 30% en poids de réticulant,
20% en poids à 85% en poids de composition monomère,
0% en poids à 60% en poids d'uréthane(méth)acrylates, 10% en poids à 40% en poids de composition polymère,
0% en poids à 5% en poids d'agrégats, contenant un ou plusieurs éléments choisis parmi les paraffines, les additifs, les stabilisants, les pigments, les colorants et/ou les adjuvants et
0% en poids à 10% en poids d'accélérateur.

12. Procédé selon la revendication 11, **caractérisé en ce qu'**il s'agit, pour l'accélérateur, d'une amine tertiaire ou d'un phosphite organique tertiaire.
